## Europäisches Patentamt

## European Patent Office

## Office européen des brevets

(19)

(11) Veröffentlichungsnummer: **0 017 763**
**B1**

(12)

# EUROPÄISCHE PATENTSCHRIFT

(45) Veröffentlichungstag der Patentschrift:
**15.06.83**

(21) Anmeldenummer: **80101329.3**

(22) Anmeldetag: **13.03.80**

(51) Int. Cl.³: **H 04 Q 3/00,** H 04 M 19/00,
H 04 Q 1/38, H 04 M 3/30

(54) Teilnehmeranschlussschaltung mit Erdtastenbetätigungs- und Isolationsfehlerindikation.

(30) Priorität: **23.03.79 DE 2911517**

(43) Veröffentlichungstag der Anmeldung:
**29.10.80 Patentblatt 80/22**

(45) Bekanntmachung des Hinweises auf die Patenterteilung:
**15.06.83 Patentblatt 83/24**

(84) Benannte Vertragsstaaten:
**AT CH DE FR GB IT NL SE**

(56) Entgegenhaltungen:
**DE-A-2 520 975**
**FR-A-2 329 126**
**US-A-3 121 775**

(73) Patentinhaber: **SIEMENS AKTIENGESELLSCHAFT,**
**Berlin und München Wittelsbacherplatz 2,**
**D-8000 München 2 (DE)**

(72) Erfinder: **Lechner, Robert, Dipl.-Ing., Haidfeldstrasse 5,**
**D-8156 Otterfing (DE)**

## Teilnehmeranschlußschaltung mit Erdtastenbetätigungs- und Isolationsfehlerindikation

Die Erfindung betrifft eine Teilnehmeranschlußschaltung mit einer Speisebrücke in Form eines in die an Erdpotential liegende Ader der Teilnehmeranschlußleitung eingefügten ersten Widerstandes, eines in die an Speisepotential liegende Ader der Teilnehmeranschlußleitung eingefügten zweiten Widerstandes, sowie eines die beiden Adern an den der Speisestromquelle abgewendeten Anschlüssen der beiden Widerstände überbrückenden Kondensators, wobei mindestens einem der Speisewiderstände ein durch einen hochohmigen Widerstand überbrückter Abschaltekontakt in Reihe geschaltet ist und wobei diese Speisebrücke an der Kondensatorseite mit einem Gabelübertrager für den Zweidraht-/Vierdrahtübergang zusammengeschaltet ist, ferner mit einer Auswerteschaltung, die bei wenigstens einem geöffneten Abschaltekontakt ein Anzeigesignal abgibt, wenn ein den zugelassenen Grenzwert übersteigender Leckstrom zwischen den Adern der Teilnehmeranschlußleitung fließt.

Teilnehmeranschlußleitungen dieser Art (siehe z. B. US-A-3 121 775), also solche, die eine teilnehmerindividuelle Speisebrücke enthalten, sind bei Vermittlungsstellen vorgesehen, die ein elektronisches Koppelfeld enthalten. Hier wie bei Vermittlungsstellen mit Raumvielfachkoppelfeldern muß vermieden werden, daß bei eine bestimmte Zeitspanne übersteigender Erdtastenbetätigung die im dann verbleibenden Teil des Speisestromkreises liegenden Schaltkreiselemente überbeansprucht werden. Bei Verwendung elektronischer Koppelfelder kann dies jedoch nicht dadurch geschehen, daß im Falle einer solchen Erdtastenbetätigung die zugehörige Satzbaugruppe abgeschaltet wird.

Aufgabe der vorliegenden Erfindung ist es daher eine Teilnehmeranschlußschaltung der obengenannten Art so auszugestalten, daß mit geringem Aufwand die aufgezeigten Probleme gelöst werden können.

Erfindungsgemäß geschieht dies dadurch, daß die Auswerteschaltung bei geschlossenen Abschaltekontakten Erdtastenbetätigungen in der an die Teilnehmeranschlußleitung angeschlossenen Teilnehmerstation anzeigt, daß die hochohmigen Widerstände so dimensioniert sind, daß bei geöffneten Abschaltekontakten der bei Erdtastenbetätigung fließende Strom so weit begrenzt wird, daß im betroffenen Teil des Speisestromkreises liegende Schaltelemente nicht beschädigt werden, und daß die Abschaltekontakte so gesteuert sind, daß sie, sofern die Erdtastenbetätigung eine vorgegebene Zeitspanne übersteigt, geöffnet und nach Beendigung der Erdtastenbetätigung wieder geschlossen werden.

Aufgrund der erfindungsgemäßen Maßnahmen ist es einerseits möglich eine in erster Linie zur Anzeige von Leckströmen vorgesehene Auswerteschaltung auch zur Erdtastenindikation heranzuziehen, andererseits die Schutzmaßnahmen gegen schädliche Auswirkungen von Leckströmen auch als Schutzmaßnahme gegen Überbeanspruchungen im Falle überlanger Erdtastenbetätigungen einzusetzen.

Die dargestellte Teilnehmeranschlußschaltung weist eine Speisebrücke auf, die aus einem Widerstand Ra, einem Widerstand Rb und aus einem Kondensator C besteht. Der Widerstand Rb liegt in der b-Ader der Teilnehmeranschlußleitung, die an Erdpotential gelegt ist. Der Widerstand Ra liegt in der a-Ader der Teilnehmeranschlußleitung, die an das Potential −UB der Speisebatterie gelegt ist. Der Kondensator C ist zwischen der a-Ader und der b-Ader an den der Speisebatterie abgewendeten Anschlüssen der Widerstände Ra und Rb angeschlossen.

Auf dieser Seite der Widerstände Ra und Rb sind auch die zweidrahtseitigen Wicklungen w1 und w2 eines Gabelübertragers Ü zur Zweidraht-/Vierdrahtübertragung in die a-Ader und in die b-Ader der Teilnehmeranschlußleitung eingefügt. An die den Widerständen Ra und Rb zugewendeten Anschlüsse der Wicklungen w1 und w2 des Gabelübertragers Ü ist eine Auswerteschaltung AS angeschlossen. Sie besteht aus einem ersten Operationsverstärker V mit zwei nichtinvertierenden Eingängen, die an den erwähnten Wicklungsanschlüssen liegen, und dessen invertierender Eingang an das Speisebatteriepotential −UB gelegt ist. Ferner weist sie einen zweiten Operationsverstärker K auf, dessen invertierendem Eingang das Ausgangssignal des Verstärkers V zugeführt wird, und an dessen nicht invertierendem Eingang eine Schwellwertspannung Uth liegt, die über einen aus den Widerständen R1 und R2 bestehenden Spannungsteiler ebenfalls von der Batteriespannung −UB abgeleitet wird. Das Ausgangssignal des Verstärkers K ist das Anzeigesignal XJ, das bei Erdtastenbetätigung auftritt.

Ein hochohmig überbrückter Abschaltekontakt po, durch den der Speisestromkreis hochohmig geschaltet werden kann, ist erfindungsgemäß entweder in die a-Ader, also die an Speisepotential liegende Ader der Teilnehmeranschlußleitung eingefügt und zwar zwischen dem Stromquellenanschluß dieser Leitungsader und deren Anschaltepunkt an den Gabelübertrager, der auch, wie angegeben, der Anschaltepunkt für den einen Eingang der Auswerteschaltung AS ist. Im dargestellten Fall liegt der Abschaltekontakt zwischen dem erwähnten Anschaltepunkt und dem Widerstand Ra, er kann jedoch auch zwischen dem Widerstand Ra und dem das Potential −UB aufweisenden Anschluß der Speisebatterie eingefügt sein. Entsprechendes gilt für einen in die b-Ader einzufügenden Abschaltekontakt, der alternativ oder aus Gründen des erdsymmetrischen Aufbaus zusätzlich vorhanden sein kann.

Der Widerstandswert des einen Abschaltekontakt überbrückenden Widerstandes ist so bemessen, daß bei geöffnetem Abschaltekontakt po der ihn aufgrund einer Erdtastenbetätigung durchfließende Reststrom die im dabei betroffenen Teil des Speisestromkreises liegenden Schaltelemente nicht beschädigt. Andererseits ist der Widerstandswert des Widerstandes Ri aber so bemessen, daß der ihn ohne Erdtastenbetätigung aufgrund eines den maximal zugelassenen Wert übersteigenden Leckstroms zwischen den beiden Adern der Teilnehmeranschlußleitung durchfließende Strom die Auswerteschaltung wie bei geschlossenem Abschaltkontakt und gleichzeitiger Erdtastenbetätigung zum Ansprechen bringt.

Die erwähnten Adern a und b der Teilnehmeranschlußleitungen führen zu einer Teilnehmerstation Tln, die eine Erdtaste E aufweist, durch deren Betätigung die a-Ader an Erdpotential gelegt werden kann.

Nachstehend wird näher auf die Betriebsweise der erfindungsgemäßen Schaltungsanordnung eingegangen, wobei die erwähnte Alternative mit nur einem in der a-Ader liegenden Abschaltekontakt betrachtet wird.

Unter der Annahme, daß der Anschaltekontakt po geschlossen ist, erfolgt ein Schleifenstromschluß beim Abheben des Teilnehmers Tln, so daß ein Schleifenstrom von Erde, über Rb, die Wicklung w1 des Übertragers Ü, die b-Ader, die Teilnehmerstation Tln, die a-Ader, die Wicklung w2, den Abschaltekontakt po und den Widerstand Ra zu dem das Potential −UB aufweisenden Anschluß der Speisebatterie fließen kann. Am Eingang B der Auswerteschaltung AS liegt dann das um den Spannungsabfall am Widerstand Rb gegenüber Erdpotential verringerte Potential −URb, am Eingang A der Auswerteschaltung liegt das um den Spannungsabfall am Widerstand Ra gegenüber der Speisebatteriespannung positivere Potential −UB +URa. Der Verstärker der Auswerteschaltung ergibt daher unter der weiteren vorstehend erwähnten Voraussetzung, daß am invertierenden Eingang das Potential −UB liegt, die Spannung URa −URb ab. In diesem Falle wird durch den Verstärker K der Auswerteschaltung wegen der entsprechenden Bemessung der Schwellspannung Uth kein Ausgangssignal abgegeben. Wenn nunmehr in der Teilnehmerstation die Erdtaste E betätigt und damit die a-Ader der Teilnehmeranschlußleitung direkt an Erde gelegt wird, ist der Widerstand Rb praktisch kurzgeschlossen, und der Speisestrom fließt im wesentlichen über den, die a-Ader, die Wicklung w2, den Abschaltekontakt po und den Widerstand Ra umfassenden Teil des Speisestromkreises.

Der Verstärker V der Auswerteschaltung gibt demnach die Spannung URa ab, so daß wegen der nunmehr vorliegenden Differenz der Eingangsgrößen des Verstärkers K der Auswerteschaltung ein entsprechendes Ausgangssignal XJ abgegeben wird, das das Vorliegen einer Erdtastenbetätigung anzeigt. Unter Einhaltung einer vorgegebenen Zeitspanne bewirkt die Steuerung der Vermittlungsstelle, zu der die dargestellte Teilnehmeranschlußschaltung gehört, dann ein Abschalten der Speisung, indem sie ein Öffnen des Abschaltekontaktes po veranlaßt. Der dem Abschaltekontakt parallel liegende Widerstand Ri ist so hochohmig, daß der bei geöffnetem Abschaltekontakt dann noch fließende Reststrom die durchflossenen Teile des Speisestromkreises nicht schädigt, auch wenn die Erdtastenbetätigung über eine längere Zeit anhält. Nach Beendigung der Erdtastenbetätigung fällt das Ausgangssignal XJ der Auswerteschaltung AS weg, woraufhin der Abschaltekontakt po wieder öffnet und sich die eingangs erläuterten Stromverhältnisse wieder einstellen.

Zur Durchführung einer Isolationsprüfung ist der Abschaltekontakt po ebenfalls geöffnet. Wie schon angedeutet, ist der im Abschaltekontakt po parallel liegende Widerstand Ri so bemessen, daß bei Überschreiten des höchstzulässigen Leckstroms, der durch den zwischen der a-Ader und der b-Ader liegenden Übergangswiderstand RI bestimmt wird, wie bei Erdtastenbetätigung eine Unsymmetrie an den Eingängen A und B der Auswerteschaltung AS hervorgerufen wird, die zur Abgabe des Signals XJ führt, womit in diesem Falle das Vorliegen eines Isolationsfehlers angezeigt wird. Sofern dieser Isolationsfehler vorübergehend ist, fällt das Signal XJ wieder weg, was genauso wie im Falle der Beendigung der Erdtastenbetätigung an die Steuerung der Vermittlungsstelle gemeldet wird.

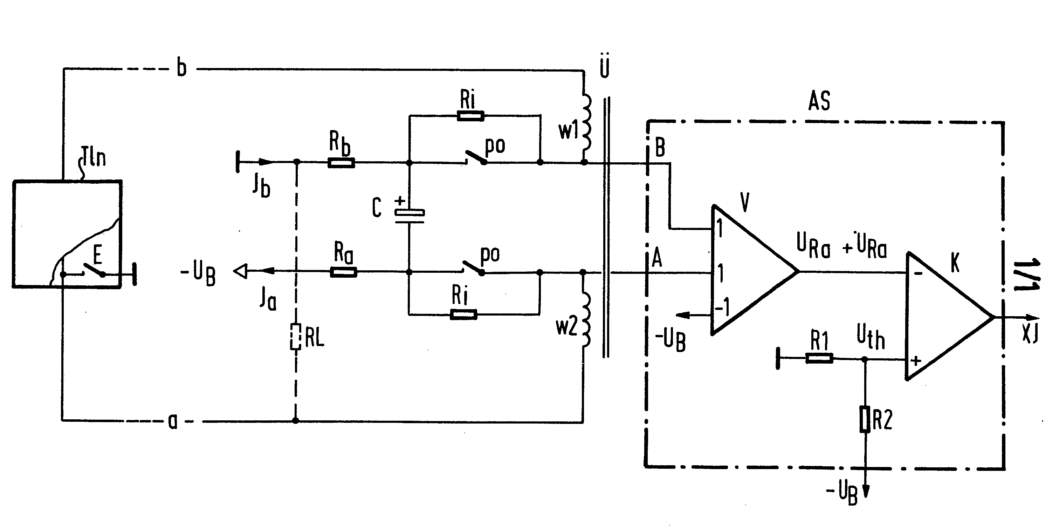

## Patentanspruch

Teilnehmeranschlußschaltung mit einer Speisebrücke in Form eines in die an Erdpotential liegende Ader der Teilnehmeranschlußleitung (b) eingefügten ersten Widerstandes (Rb), eines an die an Speisepotential (−UB) liegende Ader (a) der Teilnehmeranschlußleitung eingefügten zweiten Widerstandes (Ra), sowie eines die beiden Adern an den der Speisestromquelle abgewendeten Anschlüssen der beiden Widerstände überbrückenden Kondensators (C), wobei mindestens einem der Speisewiderstände ein durch einen hochohmigen Widerstand (Ri) überbrückter Abschaltekontakt (po) in Reihe geschaltet ist, und wobei diese Speisebrücke an der Kondensatorseite mit einem Gabelübertrager (Ü) für den Zweidraht-/Vierdrahtübergang zusammengeschaltet ist, ferner mit einer Auswerteschaltung (AS), die bei wenigstens einem geöffneten Abschaltekontakt (po) ein Anzeigesignal abgibt, wenn ein den zugelassenen Grenzwert übersteigender Leckstrom zwischen den Adern (a, b) der Teilnehmeranschlußleitung fließt, dadurch gekennzeichnet, daß die Auswerteschaltung (AS) bei geschlossenen Abschaltekontakten (po) Erdtastenbetätigungen in der an die Teilnehmeranschlußleitung angeschlossenen Teilnehmerstation (Tln) anzeigt, daß die hochohmigen Widerstände (Ri) so dimensioniert sind, daß bei geöffneten Abschaltekontakten (po) der bei Erdtastenbetätigung fließende Strom so weit begrenzt wird, daß im betroffenen Teil des Speisestromkreises liegende Schaltelemente nicht beschädigt werden, und daß die Abschaltekontakte so gesteuert sind, daß sie, sofern die Erdtastenbetätigung eine vorgegebene Zeitspanne übersteigt, geöffnet und nach Beendigung der Erdtastenbetätigung wieder geschlossen werden.

## Claims

Subscriber connection circuit comprising a supply bridge in the form or a first resistor (Rb) which is interposed into that wire of the subscriber connection line (b) which is connected to earth potential, of a second resistor (Ra) which is interposed into that wire (a) of the subscriber connection line which is connected to supply potential (−UB), and of a capacitor (C) which bridges the two wires at those terminals of the two resistors which face away from the supply current source, where at least one of the supply resistors is connected in series with a break contact (po) which is bridged by a high impedance resistor (Ri), and where this supply bridge is interconnected on the capacitor side with a hybrid transformer (Ü) for the two-wire/four-wire junction, further comprising an analysis circuit (AS) which, when at least one break contact (po) is open, emits a display signal when a leakage current which exceeds the permitted limit value flows between the wires (a, b) of the subscriber connection line, characterised in that when the break contacts (po) are closed the analysis circuit (AS) displays actuations of the earth key in the subscriber station (Tln) connected to the subscriber connection line, that the high impedance resistors (Ri) are dimensioned in such manner that when the break contacts (po) are open the current which flows when the earth key is actuated is limited to such an extent that switched elements located in the affected part of the feed circuit remain unharmed, and that the break contacts are controlled in such manner that when the actuation of the earth key extends beyond a given length of time they are opened, and are closed again on the termination of the actuation of the earth key.

## Revendication

Circuit de ligne d'abonné à point d'alimentation sous la forme d'une première résistance (Rb) montée dans la ligne principale d'abonné (b), mis au potentiel de terre, d'une seconde résistance (Ra) montée dans le fil (b) de la ligne principale d'abonné, ainsi que d'un condensateur (C) monté en parallèle sur les deux fils, aux bornes de connexion des deux résistances, qui sont éloignées de la source de courant d'alimentation, avec au moins l'une des résistances d'alimentation étant montée en série avec un contact de débranchement (po) shunté par une résistance (Ri) de forte valeur ohmique et ledit pont d'alimentation étant relié, du côté du condensateur, à un termineur (Ü) pour le passage de deux à quatre fils, et à circuit d'évaluation (AS) qui émet, lorsqu'au moins un contact de débranchement (po) est ouvert, un signal indicatif lorsque passe entre les fils (a, b) de la ligne principale d'abonné un courant de fuite qui dépasse la valeur limite admise, caractérisé par le fait que le circuit d'évaluation (AS) signale, dans le cas de contacts de branchement (po) fermés, des manipulations de la touche de mise à la terre au niveau du poste téléphonique (Tln) relié à la ligne principale d'abonné, que les résistances fortement ohmiques (Ri) sont dimensionnées de telle façon qu'avec les contacts de débranchement (po) ouverts, le courant qui passe quand on manipule la touche de mise à la terre, est limité au point que les éléments de commutation qui se situent dans la partie concernée du circuit du courant d'alimentation n'en sont pas endommagés, et que les contacts de débranchement sont commandés de telle façon qu'ils sont ouvert si la manipulation de la touche de mise à la terre dépasse un intervalle de temps prédéterminé, et sont à nouveau fermés après la fin de la manipulation de la touche de mise à la terre.

1/1